# EUROPEAN PATENT SPECIFICATION

(11) **EP 1 615 053 B1**
(45) Date of publication and mention of the grant of the patent: **29.04.2009**
(21) Application number: 05014276.9
(22) Date of filing: 30.06.2005
(51) Int. Cl.: G01V 8/20

(54) **Radiation barrier element**
Lichtschrankenelement
Elément d'une barrière optique

(30) Priority: 07.07.2004 IT to20040461
(43) Date of publication of application: 11.01.2006
(73) Proprietor: Deitech S.r.l., 10142 Torino (IT)
(72) Inventor: Scavo, Gennaro, 10142 Torino (IT); Disabato, Vito, 10142 Torino (IT); Tiengo, Ermenegildo, 10142 Torino (IT); Tiengo, Roberto, 10142 Torino (IT)
(74) Representative: Bosotti, Luciano

(56) References cited:
- EP-A- 0 821 329
- EP-A- 0 955 729
- EP-A- 1 045 353
- DE-U1- 20 211 946
- FR-A- 2 754 089
- FR-A- 2 855 296
- US-A1- 2003 106 992

## Description

The present invention relates to radiation barriers, which may be used, for example, for guaranteeing the security of sites and things. The barriers in question typically use radiation in the near infrared, for which reason these barriers are frequently referred to as "optical" barriers.

More specifically, the invention relates to a radiation barrier element which is known e.g. from EP-A-0 821 329 or EP-A-1 045 353. A somewhat similar arrangement is known from FR-A-2 754 089.

The standards that establish the minimum performance requirements for possible type approval of these barriers are fixed by the Italian Electrotechnical Committee (CEI); currently, the standard to which reference is made is the standard 79-2, second edition. These standards set the physical and functional parameters with which the product must comply and fix criteria in terms of safety regarding manipulation and use of the product itself. The standards also set all the performance requirements in terms of functionality and permeability to environmental climatic conditions and in terms of electromagnetic compatibility (EMC), namely, the sort of disturbance that may arise in normal environments of use. As regards the methodologies for conducting the EMC tests, the standard 79-2 refers back to the European standards issued by Cenelec of Geneva (IEC - International Electrotechnical Commission). The most significant institutes of national type approval at a European level are: VDS for Germany, NF A2P for France, and IMQ for Italy.

The barriers in question must meet certain basic requirements of technical performance. Some of these requirements will now be examined in greater detail.

Detection. As the word "barrier" itself indicates, the radiation barrier may be likened to an invisible barrier set up between two elements (A and B) in order to be able to detect the passage of any body or whatever else may pass through the barrier. With reference to a context of security against theft or burglary, the barrier must in the first place be able to detect passage of human beings. The standard 79-2 cited previously sets the time of obstruction and hence of interruption of the communication between the elements A and B from a minimum of 20 ms to a maximum of 100 ms.

The dimensions of the invisible barrier are identified horizontally (as range) and vertically (as height). The characteristics of range of this specific category of product on the market are approximately from 6 to 10 metres for outdoor installation and from 12 to 20 metres for indoor installation. The difference in range between indoor installation and outdoor installation is due to the effect of external agents, such as solar radiation, rain, and fog, which limit the sensitivity of the system. In height, the parameter is standardized according to three values: 50 cm (solar radiation), 100 cm (rain), and 200 cm (fog). It is on the other hand important that the other dimensions of the elements A and B of the barrier (width and depth) should be as small as possible to prevent or limit as much as possible impact on the architecture.

Installability (inside or outside). In the case of outdoor installation, the ideal degree of IP protection would be IP65. The degree of IP protection indicates the degree of protection to penetration of external bodies into a product; the first figure indicates the permeability to solid bodies, such as dust, etc., whilst the second figure indicates the permeability to liquids, water, vapour, etc. Usually, a barrier devised for indoor use cannot be installed out of doors, whereas the reverse is possible.

Connection. In this type of devices, a wire connection is usually considered indispensable. This depends upon the average current consumption, which can assume typical values of 100-150 mA, which cannot be obtained with batteries for reasons of battery life. Said consumption is practically physiological on account of the communication, which usually exploits 900-nm IR transmitters. The connection is provided so as to facilitate installation; consequently, it is preferable for there to be present on the elements A and B a terminal-board connection which will facilitate, in the event of breakdown, any possible replacement operation on the part of the installers.

Orientability. For reasons of simplicity of construction and economy, no operation of alignment is usually envisaged for barriers of this type once they have merely been fixed to the wall- The rays that enable coupling between the elements A and B regard only the front area of the mechanical profile. To enable coupling between the elements, the two columns that usually make up said elements are fixed on plane walls in the only way possible, namely, by setting them facing one another. This system of installation, currently the only one universally adopted by manufacturers, is intrinsically far from flexible- For example, in order to obtain the desired front coupling for protection of a door or window, the elements A and B of the barrier must necessarily be installed within the embrasure between the door or window frame, which of course drastically limits the range of the device.

Functionality. The barriers referred to usually comprise, as elements A and B defining the barrier, two columns of elongated shape and of very small cross section which contain an electronics that enables optical communication between them. Any body that passes through this optical connection is detected and generates an alarm warning. The electronic elements that make up the two electronic systems A and B make the optical communication by means of rays issuing from points at distances in the region of 25 cm apart, approximately giving rise to a linear density of 4 rays per metre.

As has already been said, the rays are of an IR optical type with a wavelength of approximately 900 nm (consequently, not visible to the human eye) obtained by means of IR transmitters and receivers. In this connection, there arises the need to synchronize, in the time domain, the digital pulses emitted and received by the active transmitting and receiving elements, ordering them temporally so that there is no superposition thereof within a multiray system. Synchronization enables a well-defined network of rays to be obtained and all the rays that accordingly develop vertically to be analysed from a geometrical standpoint. It is thus possible, through an operation of digital processing, to determine precisely the dimension of a body or object that traverses the barrier. If there were no proper synchronization, the pulses emitted by the transmitting elements would be superimposed on one another, preventing the receiving elements from recognizing them and thus giving rise to a deficient, unreliable system. The temporal synchronization to obtain the sequence of rays within a system of barriers represents one of the basic aspects of the system's operation, and its constructional architecture determines the level of performance of the system itself. Synchronism is nothing other than a starting pulse that enables transmitting and receiving elements of the barrier to communicate according to a temporal ordering: for example, the first sync pulse simultaneously enables transmission from the first transmitter 1 (Txl) of column A, with reception by the first receiver (Rxl) of column B, and so forth for all the other transmitter/receiver pairs in order to make the communication of all the rays comprised in the height of the barrier. Consequently, synchronism is a signal that must intervene simultaneously on both of the electronics of the elements A and B via an electrical connection.

All the products currently present on the market exploit an "optical" synchronism. This synchronism offers the advantage of not requiring an electrical wire connection between the two columns in so far as the synchronism information is encoded within the same pulses that travel from the transmitters to the receivers from column A to column B.

On the other hand, this solution leaves itself open to two basic drawbacks.

The first drawback is represented by the slowness that the entire system comes to assume: the optical sync pulse is transmitted from one column to the other by means of the same optical devices that make up the network of interception rays if, following upon a possible interruption of this optical connection (for example, for an alarm, i.e., precisely the primary function of the system), said synchronism is lost, the subsequent restoration imposes a considerable increase in the times necessary for digital processing in order to sample and determine correct resumption of synchronism. During this interval of recovery of functionality, the barrier is unable to detect other interruptions, i.e., to perform its function. Said problem generated by optical synchronism excludes its application for uses other than the sector of security alone, and in any case sets limits even in this sector because the functional modality of this system is a closed modality which limits the number of rays that can be synchronized in the minimum time of interception without any possibility of being integrated with other similar systems. Operation with similar systems would involve unsynchronized superposition with other rays, thus rendering impossible recognition thereof in both of the adjacent systems, so causing conditions of repeated alarms. Consequently, for example, in the event of having to provide a protection that develops in height beyond two metres, all the currently available products belonging to this class would not be suitable for installation. In general terms, recourse to an optical synchronism means that, following upon a disturbance or an alarm, the barrier requires an excessively long time (more than 500 ms) for restoring synchronism of the communication correctly: this limits appreciably the possibility of use in cases where fast resetting of synchronism is required in applications other than the security context, such as, for example, counting and detecting the direction and time of transit of things or people that are passing through the barrier.

In the vast majority of the products currently present on the market, the electronics of the two elements A and B are different. usually housed in one of the two is the processing unit CPU, and synchronization between the two normally occurs, as has been seen previously, via optical synchronization. Finally, constitution of the rays within the system is another aspect of particular interest. As has already been said, the rays are spaced approximately 25 cm apart, and said linear density determines the number of rays used. In a 50-cm barrier there are two rays; in a 1-m barrier there are four; in a 2-m barrier there are eight. Optical communication between transmitting and receiving elements determines the performance of the barrier. Their housing in the columns A and B determines the possibility of a software processing. In all the products present on the market the housing of the transmitting and receiving elements determines a difference between the columns A and B: in order to provide a protected stretch, it therefore becomes imperative to resort to the fabrication of two different elements A and B. The difference between the two elements A and B imposes the need to provide, store, present, and make available to the installer an assortment of two different products to obtain substantially one therefrom. This. constitutes a negative aspect from a number of standpoints.

Other critical aspects which should at least be mentioned briefly regard the possible consequences of exposure of one of the elements (or of part thereof) to solar radiation, with consequent "blinding" of the corresponding sensor elements.

The object of the present invention is to provide a barrier element capable of overcoming the drawbacks and limitations of the known art outlined above.

According to the present invention, said object is achieved thanks to a barrier element having the characteristics referred to specifically in Claim 1 that follows.

In a preferred embodiment, the element according to the invention, following upon its installation on a plane surface, has a capacity for orientation which enables oblique-transverse barriers (hence protections) to be obtained, with the possibility, in the case of a capacity of orientation of ± 90°, of providing protection of two or more adjacent doors and/or windows, so exploiting further the characteristics of range with a consistent economic advantage.

The invention will now be described, purely by way of non-limiting example, with reference to the annexed plate of drawings, in which:
- Figures 1 to 8 illustrate successive steps in the production of a barrier element of the type described herein;
- Figure 9 is an exploded perspective view, which reproduces, at an enlarged scale, the part of element indicated by the arrow IX of Figure 7;
- Figures 10 to 12 illustrate different possible contexts of application of a barrier element according to the invention; and
- Figures 13 and 14 illustrate the performance of an anti-blinding function against sunlight.

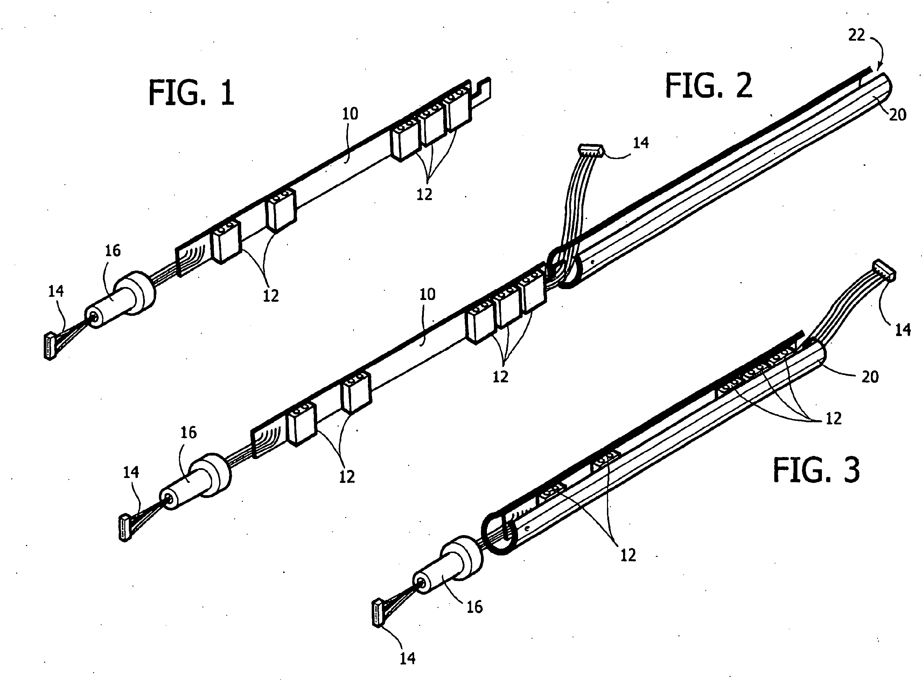

In Figure 1 of the annexed plate of drawings, the reference number 10 designates a printed-circuit board, usually made in the form of an elongated strip having a length in the region of, for example, 50 cm, 1 m or 2 m. Mounted at selectively determined distances on the supporting strip 10 are transmitting/receiving units 12 of an optical IR barrier.

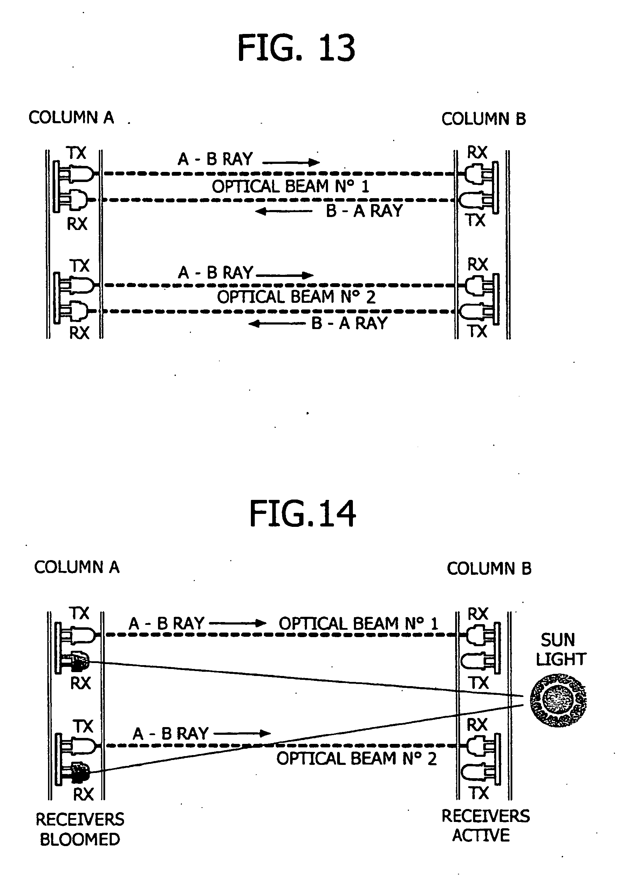

With the exception of what is said specifically herein (for example, with particular reference to Figures 13 and 14), the characteristics of the transmitting/receiving units 12 are to be considered in themselves as a whole known to the art, and hence such as not to require any detailed description herein.

In a particularly preferred embodiment it is, however, envisaged that associated to the receiving sections (and possibly also to the transmitting sections) of the units 12 are optics for concentration of the optical signal. These optical systems, preferentially associated to which are diaphragms, have the purpose of bestowing upon the corresponding electro-optical transducers (transmitters) and/or opto-electronic transducers (receivers), characteristics of high directionality in the main direction of emission/sensitivity.

In particular:
- in the case of the electro-optical transducers of the transmitters, the optical systems and the diaphragms in question aim at causing the transducer to concentrate in a practically exclusive way its emission in the direction of pointing towards the associated receiver, without lateral dispersion of the radiation; and
- in the case of the opto-electronic transducers of the receivers, the optics and the diaphragms in question aim at making the transducer sensitive in a practically exclusive way to the rays coming from the direction of the associated transmitter proving insensitive to any radiation (e.g., solar radiation) coming from outside the useful field of vision, which can constitute destabilizing elements for correct operation of the system.

Thanks to said measurements, it is possible to increase considerably the range of the individual optical barrier so as to be able to arrive, in an altogether reliable way, at range values in the region of 50-100 metres.

Similar considerations of general technical knowledge apply also to the electrical connections that come under a connector 14, which is usually of a multi-wire type, with the connection wires extending through a collar-shaped element 16, the function of which will be more readily understandable from what follows.

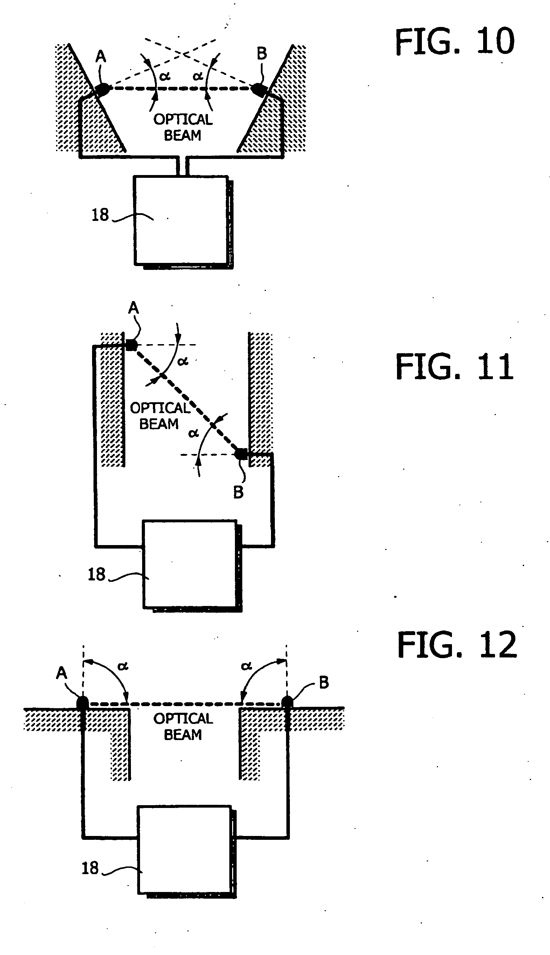

The multi-wire connector 14 enables connection of the various units 12 to a processing unit or processor that controls operation of the aforesaid units according to the criteria more fully described in what follows. In particular, the processor in question, designated by 18 in Figures 10 and 12 is designed to provide the function of hub for performing the task of synchronization, which will be explained more fully hereinafter.

Figure 2 shows the operation whereby the board 10 with the elements associated thereto is inserted into a tubular sectional element 20 (this is typically a sectional element made of aluminium with a C-shaped profile), within which the supporting board 10 can be made to slide longitudinally, maintaining the active elements (photo-emitters and photo-detectors of the units 12) aligned and therefore freely facing the slit 22 present in the C-shaped profile of the tubular sectional element 20.

The arrangement of parts just described can be understood more readily from Figure 3. Here also the possible presence of a further set of wires coming under a further multi-wire connector 14 can be appreciated more fully.

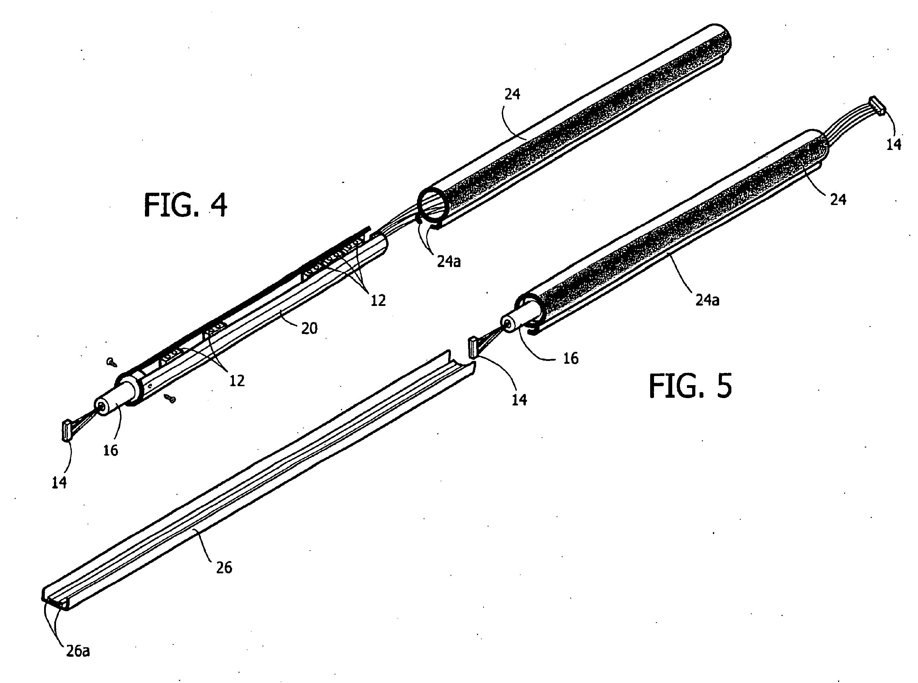

Figure 4 shows how the assembly formed with the operations previously described enables its insertion in a tube 24 designed to receive inside it the tubular sectional element 20, with a capacity for rotation about the common axis of extension.

For example, the tubular sectional element 20 can be chosen so as to have an outer diameter in the region, for example, of 25 mm, and the tube 24 is chosen in such a way as to present an internal diameter just slightly larger in order to enable the tubular sectional element 20 to rotate within the tube 24 encountering just a modest resistance.

The material constituting the tube 24 is chosen so as to be transparent to the radiation (typically IR radiation) emitted and received by the transmitting and receiving elements provided in the unit 12. For example, the tube 24 can be an extruded polycarbonate tube made of a material that is transparent to visible light or, better still, made of a material that is opaque (i.e., not transparent) to visible light but completely transparent to the IR radiation used by the unit 12.

Once the tubular sectional element 20 has been completely inserted within the tube 24, with the multi-wire connectors 14 projecting from the two ends of the tube, the tube itself can be inserted, for example by causing it to slide longitudinally, into a base part 26.

For this purpose, as is more clearly visible from the parts on the right in Figures 4 and 5, the tube 24 is usually provided, according to a general omega configuration, with two runner parts 24a, which are able to engage corresponding grooves 26a provided in the base 26.

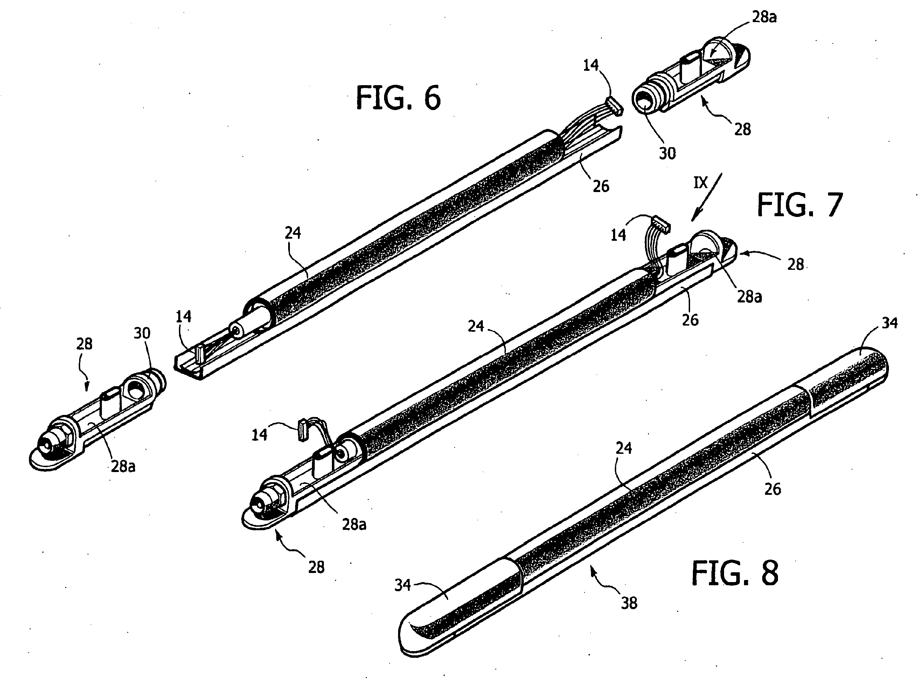

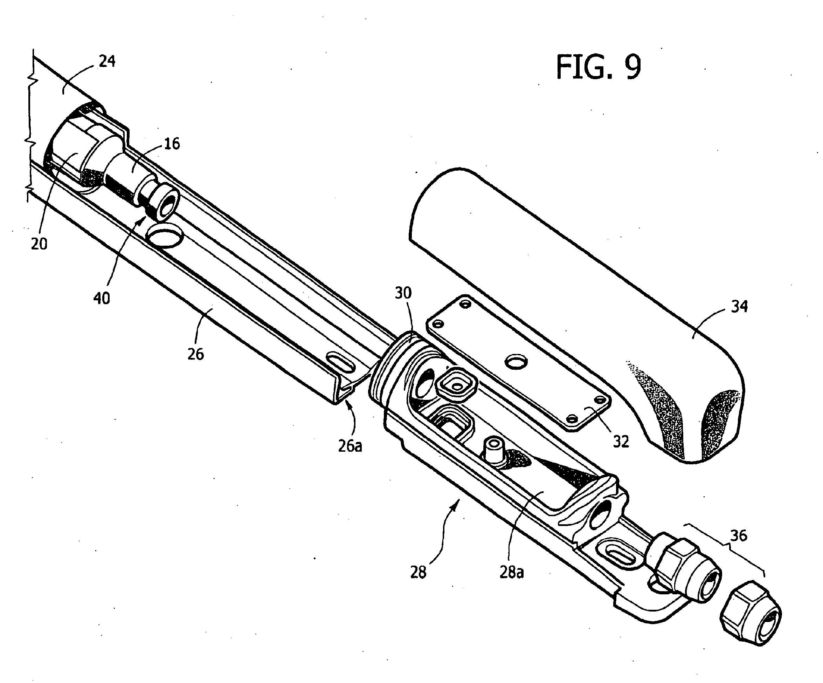

Once the assembly configuration represented in Figure 6 has been obtained, at the two ends of the tube 24 (which is, in general, a little shorter than the base 26) two plug parts 28 are applied, having the characteristics that may be appreciated more fully from Figure 9.

In practice, the plugs 28 have a core part 28a, which can be applied against the bottom wall of the base 26 and be fixed thereto by screws (not illustrated) designed to pass into the holes that are clearly visible in Figure 9.

At the end that is to face the tube 24, each plug 28 is then provided with a collar part 30, the central orifice of which is designed to support one end of the tubular sectional element 20: for example, at the visible end of Figure 9, the shank end of the element 16 passes through the axial orifice of the collar part 30.

In this way, (or in functionally equivalent ways, which can be identified readily by the person skilled in the sector) the tubular sectional element 20 is supported at its ends so as to be able to rotate in a controlled way within the tube 24, which, it will be recalled, is rotationally fixed with respect to the base 26 on account of the presence of the appendages 24a that engage the grooves 26a.

The plugs 28 usually comprise a tray part 28a, which is able to receive inside it further electronic circuitry designed to be connected to the multi-wire connector 14. These electronic components are protected from the external environment in conditions of tightness thanks to the presence of a lid 32.

In a particularly advantageous way, associated to the tubular sectional element 20 is a thermal-conditioning system comprising heating elements, which, subjected (in a known way) to a control function, enable containment of the temperature variations to which the sectional element (and the elements associated thereto) may be subjected, for example as a result of installation of the system in mountain areas or, in general, in the presence of low external temperatures. In this way, it is possible, for example, to maintain the tubular sectional element (and the elements associated thereto) at temperatures that are always above zero, thus preventing onset of phenomena of freezing and/or of formation of condensate, both on the inside and on the outside.

In a preferred way, the aforesaid thermal-conditioning elements are constituted by filiform elements (for example, heating wires) that extend in a distributed way over the sectional element, for example in slots (not visible in the drawings) extending in the wall of the sectional element. In this way, it is possible to guarantee a high uniformity in the performance of the action of thermal conditioning throughout the development of the sectional element.

Of course, the aforesaid thermal-conditioning elements can comprise also cooling elements such as Peltier-effect elements.

The end parts of the assembly thus formed (see Figure 7) can then be covered with two covers 34, at least one of which can be traversed by an insulating-bush element 36, made of one or more parts (see Figure 9) to enable the assembly thus formed of electrical supply/control connectors coming under the units 12 to come out.

The assembly thus obtained, represented in Figure 8, hence presents substantially with a column of a given length (for example, according to the active part of the device, basically dictated by the length of the tube 24, and hence in the region of 50, 100, or 200 cm), isolated in a sealed way from the outside environment in conditions that ensure its protection against the adverse effects of atmospheric agents, for instance, in the case of outdoor installation.

In a preferred way, tightness is achieved at three levels.

The first is represented by the insulating-bush element 36 for reception of the multi-wire cable just described.

The second level of tightness is advantageously represented by a saddle-shaped gasket element (not explicitly illustrated in the drawings) located on each cover 34 and the corresponding plug 28, in order to provide tightness between the wire and the electronic circuit that is located inside the plug 28 itself.

The third level of tightness is represented by an annular sealing element (O-ring, which is not visible in the drawings either) set between the annular part 30 of the plug 28 and the tube 24.

The bottom or core wall of the base 26 can be mounted and fixed against a wall. This is usually obtained by orienting the column constituting the element described, designated as a whole by 38, in a substantially vertical position and/or associating to the base 26 a device (not illustrated) for detecting any attempt to wrench or tear the column away from its seat. This is designed to give warning of any possible attempt at tampering with the barrier of which the element forms part by detaching the element itself from the wall.

Installation on the wall, made in the way described above, preserves at the same time the complete possibility of orienting the tubular sectional element 20, the supporting strip 10, and the units 12 that are located inside it about an axis coinciding with the direction of extension of the element 38, and hence (in the position of most normal use of the element 38) about a vertical or substantially vertical axis. This is obtained within a wide range of variation, given that, at least virtually, the tubular sectional element 20, the supporting strip 10, and the units 12 that are located inside can rotate even through 360° with respect to the base 26.

In practical terms, and as will be appreciated more fully from Figures 10 to 12, the assembly formed by the tubular sectional element 20 and the supporting strip 10 along with the units 12 that are located inside it, can be made to rotate so as to orient the direction of the beam emitted/received by the units 12 through ± 90° with respect to the direction perpendicular to the plane of the base 26 and hence to the plane of the wall on which the element 38 is fixed.

In this way, it is possible to use two elements 38 of the type described (designated, respectively, by A and B in the plan views of Figures 10 to 12) in a wide range of conditions of installation that are not limited to the condition of strict front facing, as instead occurs in commonly manufactured barriers.

In particular, Figure 10 shows a solution in which two columns A and B (each constituted by a device 38 of the type previously described) are mounted on the opposite sides of the embrasure of a window having a clearly splayed configuration.

Even though the two walls on which the two columns A and B are fixed are clearly not parallel to one another, it is possible to act on both of the columns A and B, causing rotation of the tubular sectional elements 20 within the respective tubes 24 until the two slits 22 are brought into the condition where the units 12 of the two columns (and only said units, not the ensemble of the two columns) are in a front-facing position. For this purpose, it is possible to act, for example, on a hole 40 located at either end of each tubular sectional element 20, with subsequent possibility of blocking by means of a grub screw, or with a U-bolt fixed with two screws that surrounds the neck of the pin for controlling rotation directly within the plug compartment.

Figure 11 shows how the same possibility of orientation may be exploited in a situation where the two columns A and B are mounted on two walls that are parallel to one another, but with the need to locate the two columns in positions staggered with respect to one another. Also in this case, it is possible to orient the tubular sectional elements 20. in a complementary way within the respective tubes 24 of the two columns in such a way as to orient the rays emitted/received by the units 12 in generically oblique positions with respect to the two walls on which the two columns are installed.

Figure 12 shows an installation solution which can be used to particular advantage to ensure protection of one or more windows or doors. This occurs by projecting an optical beam in a direction parallel to the wall in which said windows/doors are opened.

In particular, Figure 12 shows two columns A, B mounted vertically on either side with respect to the window, with the respective tubular sectional elements 20 rotated respectively through +90° and -90° with respect to the central median plane of the respective containment casings (i.e., with respect to the direction perpendicular to the plane of the base 26 of each casing) so as to achieve the desired alignment of the optical beam.

All three Figures 10 to 12 illustrate the possibility of making the wire connection of the columns A and B with a hub 18 that performs the function of synchronism at an electrical/electronic level, not at an optical level.

Unlike optical synchronism (and with the sole constraint of imposing upon the system an additional wire connection), electronic synchronism overcomes all the drawbacks and limitations described above. Since the sync signal is electrical and directed between the two elements A and B, it enables a much faster synchronization of the rays (for example, eight in number) that make up the individual link, at the same time eliminating completely any waste of time for restoring communication following upon interruption of a ray. Electronic synchronism likewise enables N (up to four) adjacent links to be synchronized with respect to one another without any mutual disturbance. This solution enables extension of the protection in height, for example, up to the sum of four two-metre basic systems, i.e., eight metres. Furthermore, it enables long corridors of protection to be obtained within open environments by means of parallel stretches, this being a requirement that is very strongly felt, for instance, in museums.

The operation of a barrier comprising two elements 38 of the type described herein is based upon an optical communication, which, in the case of interruption, determines alarm detection. The communication occurs by means of opto-electronic devices that communicate by means of an infrared light beam in the region of a wavelength of 900 nm, hence a wavelength that physically falls within the light spectrum but is not visible to the human eye.

The size of the receiving elements, which is approximately 4 mm², determines the size of the cross section of the IR light beam. This extremely small size on the one hand enables a good definition of the ray to be obtained but, on the other hand, presents shortcomings, for example, in terms of rejection in regard to small insects. These can in fact bring about random interruption in the optical communication and consequently cause an undesired alarm.

some known systems do not envisage specific countermeasures: if an insect obstructs the ray, the barrier detects it as just any other alarm.

Various manufacturers have, instead, equipped their systems with "anti-insect" devices. These are obtained by resorting to different solutions. Some act on the digital analysis of a number of rays, reducing, however, the level of security in so far as there are thus created areas of passage without any protection. Other solutions envisage enlargement of the geometry of the rays by combining three transmitters and two receivers in an OR configuration, thus determining a geometry of a few square centimetres and limiting the area of obstruction that can be caused by an insect.

Once again, barriers that are installed out of doors are exposed to negative phenomena, such as jumps in temperature, humidity, rain, snow and, above all, possible exposure to sunlight. Amongst the forms of radiation transmitted by the sun is IR radiation at approximately 900 nm, which is at the basis of the optical communication of infrared optical barrier systems. The amount of IR-light specific energy is so high that, if it is coupled in a perpendicular way with the receiving elements of the barriers it can interrupt operation, by blinding said barriers, for the entire duration of the coupling, so causing a condition of permanent alarm. The sun exerts its major influence on the receiving elements of the barriers, above all when it is low on the horizon, i.e., at sunrise and at sunset.

Usually, this problem is dealt with by choosing installation sites out of the reach of sunlight. In practice, this implies giving up any idea that barriers capable of functioning properly out of doors currently do not exist. In addition, the orbital movement of the sun varies throughout the year: however carefully it may be placed, a system is in any case exposed sooner or later during the year, even for just a few minutes of the day, to a risk of blinding by sunlight.

A preferred embodiment of the solution described herein prevents this problem if it is noted that the optical communication of the individual ray of the barrier is unidirectional from the transmitter to the receiver and as the architecture of the communication of the individual ray within a system varies. This is obtained by doubling what in traditional barriers is a single ray and thus replacing the unidirectional communication in the context of a pair of transmitters with a double opposed pair of elements which cross one another so as to constitute a double ray, where the communication is thus bi-directional.

This solution is illustrated in Figures 13 and 14 where there is schematically represented a barrier comprising two columns A and B, between which a barrier comprising a first optical beam (optical beam No. 1) and a second optical beam (optical beam No. 2) is set up, each of said beams being in effect constituted by a ray that travels from A to B (ray A-B) and by a ray that travels from by B to A (ray B-A).

In this way, the sun can at the most affect only one of the two receivers at a time, not interfering in any way with the other one, which is not exposed to sunlight. This solution can be implemented in a particularly advantageous way when very short times of analysis are available by typically resorting to a direct electrical synchronism and not to an optical one.

In a particularly advantageous way, the solution described herein renders installation more flexible, enabling a greater adaptability and solving also "seasonal" problems linked to outdoor installation.

In particular, it is possible to proceed to a "partialiaation" of the individual element, which enables, with a simple programming operation that can be carried out even while the product is operating and is installed, change of the state of security along the height of the individual stretch (for example, 2 metres). In particular, it is possible, with the exclusion of some rays, to create windows where the security is active alternating with windows where the security is excluded. This kind of performance is very useful for outdoor installations in so far as it enables, given any initial installation, adaptation of operation to events that occur only seasonally.

For example, in the case of an installation for the perimetral protection of a dwelling with garden, growth of grass could inadvertently lead to a problem of obscuration of the protective rays close to the ground, causing undesired alarms. Such a problem can be readily solved by just excluding the rays that may be obscured by the growth of grass. Furthermore, this operation does not apparently lead to a reduction in protection in so far as it does not alter the original position of installation, which usually envisages that the two columns A and B of the system should be mounted with their bottom ends at the level of the ground.

On the other hand, it will be appreciated that, even though the solution according to the invention has been described with reference to infrared sensors, and in particular ones of the passive type with a curtain detection lobe, it can also be applied, without any limitation, to barriers that use radiation of a different type, such as microwave radar barriers, modular active-IR barriers, and compact active-IR barriers.

In particular, the solution according to the invention finds advantageous application in devices for perimetral security, enabling provision of compact security barriers. In the preferred embodiment, once installation is completed, it is possible to perform an orientation of all the rays with a single, simple mechanical operation, thanks to a rotation device integrated within the mechanical structure.

The solution described herein overcomes the traditional demarcation between the types of active-infrared barriers on the market. Modular barriers are in fact to be deemed an older technology, which has marked the birth of these products: they present advantages but also disadvantages according to the installation requirements. Originally, these barriers appeared as single-ray devices. Subsequently, by integrating different individual orientable devices within a mechanical column, it has been possible to create a barrier of a height that can vary from one to three metres. On the other hand, this solution presents various complications: in the first place, the overall dimensions; then, integration of a number of rays within a column imposes the need for cross-sectional dimensions of the bar in the region of 100 cm², as against a cross section of 7-8 cm² of a compact barrier; furthermore, the set of a number of individual devices involves a certain amount of work for their wiring-up, which must be carried out by the installer. The operation of ray orientation must be carried out on an individual basis, whereas in compact barriers it occurs in common for all the rays that make up said barriers, including the closing assemblage.

The solution described herein is suitable for achieving a high level of flexibility in the processing of intrusion signals, with the possibility of defining particularly sophisticated strategies of use.

In particular, the "low-level" intrusion signals generated by the single barriers are suited to being used for generating "high-level" signals, which can be presented to the user by means of a video/graphic user interface, thus providing a real-time representation of the state of operation of the entire system, including all the configurations set on the control unit (the socalled hub 18, possibly backed up by an external processing unit, such as a personal computer).

It will be appreciated that the foregoing is obtained in a way that is altogether independent of the fact that the anti-intrusion system is at the moment configured for generation of alarm signals: in this way, it is possible, for example, to monitor the protected area, detecting phenomena of intrusion therein, even when the intrusion does not in itself give rise to an alarm signal.

The possibility itself of generating "high-level" signals that can be presented to the user enables generation of historic files on the operation of the system. These historic files gather together, among other things, information regarding all the phenomena of intrusion detected, including, for example, data on the moment in which the individual intrusion has been detected, the characteristics thereof (duration, probable type of intruder, etc.). Said historic files form a data base, which can be processed with normal computer tools (also for "forensic" purposes) and possibly be exported from the system (for example, to a web space), for instance following upon issue of an alarm, ensuring storage of the data even in the case of attempts of attack on the processing unit (PC) of the system.

## Claims

1. A radiation barrier element (38), comprising:
- a casing (24, 26, 34) provided with a fixing base (26) extending in a given direction; and
- a support (10) which is inserted in the casing the support (10) being selectively orientable with respect to said casing (24, 26, 34) about an axis that is substantially co-extensive with said given direction so as to orient beams of radiation, and wherein
said support (10) carries a plurality of radiation beam transmitting/receiving units (12), each of said units (12) comprising both a transmitter module (Tx) and a receiver module (Rx).

2. The element according to Claim 1, **characterized in that** said casing (24, 26, 30) comprises a tubular part (24), which extends along said axis and is able to receive said support (10) in a rotatable way inside it.

3. The element according to Claim 2, **characterized in that** said tubular part (24) is made of plastic material.

4. The element according to Claim 2, **characterized in that** said tubular part is made of material opaque to visible radiation but transparent to the radiation generated and/or received by said at least one unit (12).

5. The element according to any one of Claims 2 to 4, **characterized in that** said support (10) is set in a sectional element (20), which is in turn mounted so that it can rotate within said tubular part (24).

6. The element according to Claim 5, **characterized in that** said sectional element (20) has a general C-shaped configuration with a slit (22) facing which is said at least one unit (12).

7. The element according to Claim 5 or Claim 6, **characterized in that** said sectional element (20) has a substantially circular shape.

8. The element according to any one of the preceding claims, **characterized in that** said support (10) is in the form of a printed-circuit board.

9. The element according to Claim 1 or Claim 8, **characterized in that** said support (10) has a general strip-like configuration extending in said given direction.

10. The element according to any one of the preceding claims, **characterized in that** said casing has end parts (28) provided with hinge-like formations (30) for supporting said support (10) with a capacity for orientation with respect to the casing.

11. The element according to Claim 10, **characterized in that** said hinge-like formations have at least one annular part (30) which is able to receive in a relationship of rotation inside it a pin-like formation (16) projecting from said support (10).

12. The element according to Claim 10 or Claim 11, **characterized in that** at least one of said end parts (28) is provided with a cavity (28a) for receiving electronic components.

13. The element according to Claim 12, **characterized in that** said cavity (28a) is provided with a covering part (32, 34) for sealing the cavity (28a) itself.

14. The element according to any one of the preceding claims, **characterized in that** said fixing base (26) is substantially plane.

15. The element according to Claim 14, **characterized in that** said support (10) has a capacity of orientation substantially equal to ± 90° with respect to the perpendicular to the plane of said fixing base (26).

16. The element according to any one of the preceding claims, **characterized in that** it comprises a set of said transmitting/receiving units (12), which is able to generate/receive radiation beams designed to co-operate in a relationship of synchronism with a homologous set of units mounted on a similar barrier element (38), said relationship of synchronism being established electrically (18).

17. The element according to any one of the preceding claims, **characterized in that** each of said transmitting/receiving units (12) has associated thereto an optical system for concentrating said radiation.

18. The element according to Claim 17, **characterized in that** coupled to said optical system of concentration is a diaphragm.

19. The element according to any one of the preceding claims, **characterized in that** it comprises at least one thermal-conditioning element.

20. The element according to Claim 5 and Claim 19, **characterized in that** said at least one thermal-conditioning element is mounted on said sectional element (20).

21. The element according to Claim 19 or Claim 20, **characterized in that** said at least one thermal-conditioning element acts in a distributed way.

22. The element according to Claim 20 and Claim 21, **characterized in that** said at least one thermal-conditioning element is an elongated element that extends along the wall of said sectional element (20).

23. The barrier element according to any one of the preceding claims, comprised in an assortment of elements (38) substantially similar to one another in the absence of substantial structural differences between different elements of the assortment.

24. The radiation barrier element according to any one of the preceding claims, **characterized in that** said transmitting/receiving units (12) operate with infrared radiation, preferentially with a wavelength in the region of 900 nm.

25. The radiation barrier element according to any one of the preceding claims, **characterized in that** said casing (24, 26, 34) is substantially sealed (36) with respect to the outside environment.

## Patentansprüche

1. Strahlungsschrankenelement (38) umfassend:
- ein Gehäuse (24, 26, 34), das mit einer sich in einer gegebenen Richtung erstreckenden Befestigungsbasis (26) versehen ist; und
- eine Halterung (10), die in das Gehäuse eingefügt ist, wobei die Halterung (10) wahlweise mit Bezug auf das Gehäuse (24, 26, 34) um eine Achse, die im Wesentlichen mit der gegebenen Richtung koextensiv ist, ausrichtbar ist, so dass Strahlen einer Strahlung ausgerichtet werden, und wobei
die Halterung (10) mehrere Strahlungsstrahl-Sende/Empfangs-Einheiten (12) trägt, wobei jede der Einheiten (12) sowohl ein Sendermodul (Tx) als auch ein Empfängermodul (Rx) umfasst.

2. Element nach Anspruch 1, **dadurch gekennzeichnet, dass** das Gehäuse (24, 26, 30) einen röhrenförmigen Teil (24) umfasst, der sich entlang der Achse erstreckt und geeignet ist, die Halterung (10) auf eine drehbare Weise in seinem Inneren aufzunehmen.

3. Element nach Anspruch 2, **dadurch gekennzeichnet, dass** der röhrenförmige Teil (24) aus Kunststoffmaterial besteht.

4. Element nach Anspruch 2, **dadurch gekennzeichnet, dass** der röhrenförmige Teil aus Material besteht, das für sichtbare Strahlung undurchlässig aber für die durch die zumindest eine Einheit (12) erzeugte und/oder empfangene Strahlung durchlässig ist.

5. Element nach einem der Ansprüche 2 bis 4, **dadurch gekennzeichnet, dass** die Halterung (10) in ein Profilelement (20) gesetzt ist, das wiederum so angebracht ist, dass es sich innerhalb des röhrenförmigen Teils (24) drehen kann.

6. Element nach Anspruch 5, **dadurch gekennzeichnet, dass** das Profilelement (20) einen im Wesentlichen C-förmigen Aufbau mit einem Schlitz (22) aufweist, welcher der zumindest einen Einheit (12) gegenüberliegt.

7. Element nach Anspruch 5 oder 6, **dadurch gekennzeichnet, dass** das Profilelement (20) eine im Wesentlichen runde Form aufweist.

8. Element nach einem der vorhergehenden Ansprüche, **dadurch gekennzeichnet, dass** die Halterung (10) in Form einer Platine vorliegt.

9. Element nach Anspruch 1 oder 8, **dadurch gekennzeichnet, dass** die Halterung (10) einen im Wesentlichen streifenartigen Aufbau aufweist, der sich in der gegebenen Richtung erstreckt.

10. Element nach einem der vorhergehenden Ansprüche, **dadurch gekennzeichnet, dass** das Gehäuse Endteile (28) aufweist, die mit gelenkartigen Strukturen (30) zum Halten der Halterung (10) mit einer Funktion zur Ausrichtung mit Bezug auf das Gehäuse versehen sind.

11. Element nach Anspruch 10, **dadurch gekennzeichnet, dass** die gelenkartigen Strukturen zumindest einen ringförmigen Teil (30) aufweisen, der geeignet ist, in einer Drehbeziehung in seinem Inneren eine stiftartige Struktur (16) aufzunehmen, die von der Halterung (10) hervorsteht.

12. Element nach Anspruch 10 oder 11, **dadurch gekennzeichnet, dass** zumindest einer der Endteile (28) mit einer Aussparung (28a) zum Aufnehmen elektronischer Komponenten versehen ist.

13. Element nach Anspruch 12, **dadurch gekennzeichnet, dass** die Aussparung (28a) mit einem Abdeckteil (32, 34) zum Verschließen der Aussparung (28a) selbst versehen ist.

14. Element nach einem der vorhergehenden Ansprüche, **dadurch gekennzeichnet, dass** die Befestigungsbasis (26) im Wesentlichen eben ist.

15. Element nach Anspruch 14, **dadurch gekennzeichnet, dass** die Halterung (10) eine Funktion zur im Wesentlichen ± 90° mit Bezug auf die Senkrechte zu der Ebene der Befestigungsbasis (26) entsprechenden Ausrichtung aufweist.

16. Element nach einem der vorhergehenden Ansprüche, **dadurch gekennzeichnet, dass** es einen Satz von den Sende/EmpfangsEinheiten (12) umfasst, der geeignet ist, Strahlungsstrahlen zu erzeugen/empfangen, die ausgelegt sind, in einer Synchronbeziehung mit einem an einem ähnlichen Schrankenelement (38) angebrachten entsprechenden Satz von Einheiten zusammenzuwirken, wobei die Synchronbeziehung elektrisch (18) gebildet ist.

17. Element nach einem der vorhergehenden Ansprüche, **dadurch gekennzeichnet, dass** jede der Sende/Empfangs-Einheiten (12) ein zu dieser gehöriges optisches System zum Konzentrieren der Strahlung aufweist.

18. Element nach Anspruch 17, **dadurch gekennzeichnet, dass** eine Membran mit dem optischen Konzentrationssystem gekoppelt ist.

19. Element nach einem der vorhergehenden Ansprüche, **dadurch gekennzeichnet, dass** es mindestens ein Wärmekonditionierungs-Element umfasst.

20. Element nach Anspruch 5 und 19, **dadurch gekennzeichnet, dass** das mindestens eine Wärmekonditionierungs-Element an dem Profilelement (20) angebracht ist.

21. Element nach Anspruch 19 oder 20, **dadurch gekennzeichnet, dass** das mindestens eine Wärmekonditionierungs-Element auf eine verteilte Weise wirkt.

22. Element nach Anspruch 20 und 21, **dadurch gekennzeichnet, dass** das mindestens eine Wärmekonditionierungs-Element ein längliches Element ist, das sich entlang der der Wand des Profilelements (20) erstreckt.

23. Schrankenelement nach einem der vorhergehenden Ansprüche, das in einer Auswahl von Elementen (38) beinhaltet ist, die in Abwesenheit wesentlicher struktureller Unterschiede zwischen verschiedenen Elementen der Auswahl im Wesentlichen ähnlich zueinander sind.

24. Strahlungsschrankenelement nach einem der vorhergehenden Ansprüche, **dadurch gekennzeichnet, dass** die Sende/EmpfangsEinheiten (12) mit Infrarotstrahlung, vorzugsweise mit einer Wellenlänge im Bereich von 900 nm, funktionieren.

25. Strahlungsschrankenelement nach einem der vorhergehenden Ansprüche, **dadurch gekennzeichnet, dass** das Gehäuse (24, 26, 34) im Wesentlichen mit Bezug auf die äußere Umgebung abgeschlossen (36) ist.

## Revendications

1. Élément de barrière à rayonnement (38), comprenant :
- un boîtier (24, 26, 34) doté d'une base de fixation (26) qui s'étend dans une direction donnée ; et
- un support (10) qui est inséré dans le boîtier, le support (10) pouvant être orienté de manière sélective par rapport audit boîtier (24, 26, 34) autour d'un axe qui s'étend sensiblement dans ladite direction donnée de façon à orienter des faisceaux de rayonnement, et dans lequel :
ledit support (10) porte une pluralité d'unités d'émission / réception de faisceaux de rayonnement (12), chacune desdites unités (12) comprenant un module émetteur (Tx) et un module récepteur (Rx).

2. Élément selon la revendication 1, **caractérisé en ce que** ledit boîtier (24, 26, 30) comprend une partie tubulaire (24), qui s'étend le long dudit axe et peut recevoir ledit support (10) d'une manière rotative à l'intérieur de celui-ci.

3. Élément selon la revendication 2, **caractérisé en ce que** ladite partie tubulaire (24) est réalisée dans un matériau de matière plastique.

4. Élément selon la revendication 2, **caractérisé en ce que** ladite partie tubulaire est réalisée dans un matériau opaque vis-à-vis du rayonnement visible mais transparent vis-à-vis du rayonnement généré et / ou reçu par ladite au moins une unité (12).

5. Élément selon l'une quelconque des revendications 2 à 4, **caractérisé en ce que** ledit support (10) est placé dans un élément multiple (20), qui est monté à son tour de telle sorte qu'il puisse tourner à l'intérieur de ladite partie tubulaire (24).

6. Élément selon la revendication 5, **caractérisé en ce que** ledit élément multiple (20) présente une configuration générale en forme de C avec une fente (22) en face de laquelle se trouve ladite au moins une unité (12).

7. Élément selon la revendication 5 ou la revendication 6, **caractérisé en ce que** ledit élément multiple (20) présente une forme sensiblement circulaire.

8. Élément selon l'une quelconque des revendications précédentes, **caractérisé en ce que** ledit support (10) se présente sous la forme d'une carte de circuit imprimé.

9. Élément selon la revendication 1 ou la revendication 8, **caractérisé en ce que** ledit support (10) présente une configuration générale similaire à une bande qui s'étend dans ladite direction donnée.

10. Élément selon l'une quelconque des revendications précédentes, **caractérisé en ce que** ledit boîtier présente des parties d'extrémité (28) dotées de formations (30) similaires à une charnière destinées à supporter ledit support (10) avec une capacité d'orientation par rapport au boîtier.

11. Élément selon la revendication 10, **caractérisé en ce que** lesdites formations similaires à une charnière présentent au moins une partie annulaire (30) qui est capable de recevoir à l'intérieur et dans une relation de rotation une formation similaire à une broche (16) qui fait saillie à partir dudit support (10).

12. Élément selon la revendication 10 ou la revendication 11, **caractérisé en ce que** l'une au moins desdites parties d'extrémité (28) est dotée d'une cavité (28a) destinée à recevoir des composants électroniques.

13. Élément selon la revendication 12, **caractérisé en ce que** ladite cavité (28a) est dotée d'une partie de fermeture (32, 34) destinée à sceller la cavité (28a) elle-même.

14. Élément selon l'une quelconque des revendications précédentes, **caractérisé en ce que** ladite base de fixation (26) est sensiblement plate.

15. Élément selon la revendication 14, **caractérisé en ce que** ledit support (10) présente une capacité d'orientation sensiblement égale à ± 90° par rapport à la perpendiculaire au plan de ladite base de fixation (26).

16. Élément selon l'une quelconque des revendications précédentes, **caractérisé en ce qu'**il comprend un ensemble desdites unités d'émission / réception (12), qui est capable de générer / recevoir des faisceaux de rayonnement conçus de manière à coopérer dans une relation de synchronisme avec un ensemble homologue d'unités montées sur un élément de barrière (38) similaires, ladite relation de synchronisme étant établie de manière électrique (18).

17. Élément selon l'une quelconque des revendications précédentes, **caractérisé en ce que** chacune desdites unités d'émission / réception (12) se voit associer un système optique destiné à concentrer ledit rayonnement.

18. Élément selon la revendication 17, **caractérisé en ce qu'**un diaphragme est couplé audit système optique de concentration.

19. Élément selon l'une quelconque des revendications précédentes, **caractérisé en ce qu'**il comprend au moins un élément de conditionnement thermique.

20. Élément selon la revendication 5 et la revendication 19, **caractérisé en ce que** ledit au moins un élément de conditionnement thermique est monté sur ledit élément multiple (20).

21. Élément selon la revendication 19 ou la revendication 20, **caractérisé en ce que** ledit au moins un élément de conditionnement thermique agit d'une manière répartie.

22. Élément selon la revendication 20 et la revendication 21, **caractérisé en ce que** ledit au moins un élément de conditionnement thermique est un élément allongé qui s'étend le long de la paroi dudit élément multiple (20).

23. Élément de barrière selon l'une quelconque des revendications précédentes, composé d'un ensemble d'éléments (38) sensiblement similaires les uns aux autres en l'absence de différences structurales sensibles entre les différents éléments de l'ensemble.

24. Élément de barrière à rayonnement selon l'une quelconque des revendications précédentes, **caractérisé en ce que** lesdites unités d'émission / réception (12) fonctionnent avec un rayonnement infrarouge, qui présente de préférence une longueur d'onde de l'ordre de 900 nm.

25. Élément de barrière à rayonnement selon l'une quelconque des revendications précédentes, **caractérisé en ce que** ledit boîtier (24, 26, 34) est sensiblement scellé (36) par rapport à l'environnement extérieur.
